# EUROPÄISCHE PATENTSCHRIFT

(11) **EP 1 862 604 B1**
(45) Veröffentlichungstag und Bekanntmachung des Hinweises auf die Patenterteilung: **29.03.2017**
(21) Anmeldenummer: 07010787.5
(22) Anmeldetag: 31.05.2007
(51) Int. Cl.: E03D 1/32, F16K 31/34, F16K 47/02

(54) **Füllventil**
Charging valve
Soupape de remplissage

(30) Priorität: 02.06.2006 DE 102006026284
(43) Veröffentlichungstag der Anmeldung: 05.12.2007
(73) Patentinhaber: Sanitärtechnik Eisenberg GmbH, 07607 Eisenberg/Thür. (DE)
(72) Erfinder: Forkel, Frank, 96450 Coburg (DE); Krzyzanowski, Michael, 96472 Rödental (DE)
(74) Vertreter: Hecht, Jan-David

(56) Entgegenhaltungen:
- EP-A1- 0 369 404
- EP-A2- 1 199 502
- US-A- 3 285 277

## Beschreibung

Die Erfindung bezieht sich auf ein Füllventil für einen Spülkasten gemäß den im Oberbegriff des Patentanspruchs 1 angegebenen Merkmalen.

Aus der EP 1 199 502 A2 ist ein derartiges Füllventil bekannt, welches ein Gehäuse und ein mit diesem mittels einer Überwurfmutter verbundenes Fitting mit einem als Anschluss an eine Wasserleitung enthält. In dem Gehäuse ist eine Membranventileinheit angeordnet, vor welcher in Strömungsrichtung des einströmenden Wassers zur Geräuschdämpfung im Fitting ein Verteiler mit einem als Querwand ausgebildeten Prallelement vorgesehen ist. Der Verteiler ist in einem erweiterten Sitzbereich eines Kanals des Fittings angeordnet. Der Verteiler weist strahlenkranzartig radial nach außen gerichtete Arme und Rippen auf, welche radial innen mit dem Prallelement verbunden sind und radial außen an der Innenwand des genannten Sitzbereichs anliegen. Der Verteiler ist mittels einer Förderscheibe der Membranventileinheit im Fitting festgelegt.

Weiterhin ist aus der EP 0 369 404 A1 ein Füllventil mit einem ein Membranventil enthaltenden Gehäuse bekannt, mit welchen ein Fitting mit einem Anschluss an eine Wasserleitung verbunden ist. In dem Fitting ist ein Verteiler angeordnet, welcher in Richtung zum Anschluss topfartig ausgebildet ist und mittels Rippen auf einem Ring des Membrans abgestützt ist. Ein Verschlußdeckel einer Öffnung des Gehäuses ist nicht vorhanden, und der Verteiler ist nicht in einer solchen Öffnung festgelegt.

Ein weiteres Füllventil ist aus der US 3 285 277 bekannt, wobei mit einem Ventilgehäuse ein Einlaßrohr in Strömungsrichtung vor dem Ventil verbunden und räumlich getrennt vom Ventil im Einlaßrohr ein Ausgleicher sowie ein Druckregler angeordnet sind. Der Ausgleicher ist als eine Hülse ausgebildet und der Druckregler enthält axial ausgerichtete Durchgangsbohrungen zur Reduzierung des Strömungsquerschnitts.

Schließlich ist aus der DE 10 2005 033 619 A1 ein Fültventil für einen Spülkasten bekannt, welches einen Anschluss an eine Wasserleitung und einen Auslassteil sowie ein mit diesem verbundenes Füllrohr aufweist. Das Füllventil ist zur seitlichen Montage an einer Wand des Spülkastens in dessen Innenraum ausgebildet, wobei der Anschluss über einen durch die Seitenwand des Spülkastens hindurch geführten Anschlusskörper mit einer Wasserleitung verbindbar ist. Nach der Montage ragt das Füllrohr im wesentlichen vertikal nach unten in den Spülkasten hinein. Das Gehäuse des Füllventils enthält im Strömungsweg zwischen dem Anschluss und dem Auslassteil ein Ventil, welches als Membranventil ausgebildet ist und einen mittels eines Schwimmers betätigbaren Ventilkörper enthält.

Hiervon ausgehend liegt der Erfindung die Aufgabe zugrunde, das Füllventil mit einem geringen konstruktiven Aufwand dahingehend weiter zu bilden, dass eine miniaturisierte kompakte Bauweise erreicht wird und Strömungsgeräusche reduziert oder weitgehend vermieden werden. Das Follventil soll einen geringen Fertigungs- und Montageaufwand erfordern und/oder für eine einfache Durchführung etwaiger Service-Maßnahmen ausgebildet sein. Ferner soll das Füllventil für eine einfache und/oder wirtschaftliche Fertigung, insbesondere mittels Automaten ausgebildet sein, wobei die Montage und gegebenenfalls Demontage der verschiedenen Komponenten problemlos durchführbar sein soll.

Die Lösung dieser Aufgabe erfolgt gemäß den im Patentanspruch 1 angegebenen Merkmalen.

Das erfindungsgemäße hydraulische Füllventil zeichnet sich durch eine einfache und gleichwohl funktionsgerechte Konstruktion aus, wobei die einzelnen Komponenten mit geringem Aufwand gefertigt und montiert werden können. Das Ventilgehäuse enthält ausgehend vom Anschluss bzw. Anschlusskörper einen durchgehenden Kanal, durch welchen das Wasser bis zum Ventil einströmen kann. Am Ende des Kanals ist ein Verteiler angeordnet, mittels welchem das Wasser in eine Kammer vor dem Ventil, insbesondere dessen Membrane, geleitet wird. Der Verteiler enthält insbesondere ein Prallelement, welches im wesentlichen orthogonal zur Strömungsrichtung des einströmenden Wassers und/oder zur Richtung des Kanals und/oder zumindest dessen Endbereich angeordnet ist. Bei geöffnetem Ventil und/oder Membranventil wird mittels des Verteilers und insbesondere dessen Prallelements die Strömung in der Kammer beruhigt und/oder ausgeglichen, wobei unerwünschte Verwirbelungen und/oder Ringströmungen und/oder Strömungsgeräusche vermieden bzw. auf ein Minimum reduziert werden. Der Verteiler ist ein separates Bauteil und durch eine mittels des Verschlussdeckels verschließbare Öffnung in das Ventilgehäuse in einfacher Weise einschiebbar und bei Bedarf herausnehmbar. Ferner ist der Verteiler an und/oder mittels eines Dichtrings und/oder der genannten Membrane abgestützt und/oder festgelegt, so dass er entgegen einer Bewegung infolge des Wasserdrucks zuverlässig gesichert ist. Ferner kann der Verteiler insbesondere zur Wartung bzw. Service-Maßnahmen, bei geöffnetem Verschlussdeckel leicht aus dem Ventilgehäuse heraus genommen werden. Das Ventilgehäuse ist einteilig ausgebildet und enthält an einer Seite den Anschluss mit dem Anschlusskörper und hierzu diametral auf der anderen Seite die genannte Öffnung mit dem Verschlussdeckel, dem Ventil sowie dem Verteiler. Zwischen dem genannten Anschluss und der Öffnung, welche im Wesentlichen horizontal ausgerichtet sind, enthält das Ventilgehäuse ein nach unten gerichtetes Anschlussteil zur Verbindung mit dem Füllrohr.

Weiterhin ist für die lösbare Arretierung des Anschlusskörpers, welcher bevorzugt als Messingnippel ausgebildet ist, ein mit dem Ventilgehäuse in Eingriff bringbarer und bei Bedarf in einfacher Weise lösbarer Riegel vorgesehen. Mittels des Riegels kann der Anschlusskörper ohne von diesem die angeschlossene Wasserleitung entfernen zu müssen, vom Füllventil bzw. dem Ventilgehäuse getrennt werden. Der Riegel ist bevorzugt derart angeordnet, dass er nach der Montage im Innenraum eines Spülkastens liegt und dort in einfacher Weise zugänglich ist. So kann der Anschlusskörper mit seinem freien Ende an die Wasserleitung insbesondere angelötet sein und bleiben, wobei aufgrund der lösbaren Verriegelung jederzeit das Füllventil entfernt werden kann. Somit können insbesondere ein im Anschlusskörper angeordneter Durchflussregler ebenso wie die übrigen Komponenten des Füllventils sehr bequem gereinigt und/oder ausgetauscht werden.

Ferner ist im Anschlussteil für das Füllrohr und in Strömungsrichtung hinter dem Hauptventil ein Führungskörper vorgesehen, mittels welchem an der Innenwand des Gehäuses bzw. des Anschlussteils das Wasser mit geringer Fließgeschwindigkeit nach unten geführt wird, wodurch Fließ- und/oder Strömungsgeräusche weitgehend vermieden werden. Der Führungskörper ist von unten in das Ventilgehäuse und/oder dessen Anschlussteil einschiebbar und/oder angeordnet und befindet sich im eingebauten Zustand zumindest teilweise unter dem genannten durchgehenden Kanal und enthält an seiner Unterseite eine wendelförmig ausgebildete Führungsfläche, an welcher das ausströmende Wasser nach unten in das Füllrohr abgeleitet wird. Der Führungskörper ist im Wesentlichen ringförmig ausgebildet und mittels einer Trennwand des Ventilgehäuses und/oder des Kanals von diesem getrennt. Der Führungskörper und das Gehäuse, insbesondere im Bereich des Anschlußteils, sind derart aneinander angepaßt und/oder ausgebildet und/oder enthalten Elemente zur Drehsicherung und/oder Positionierung des Führungskörpers in einer vorgegebenen Drehwinkel-Position bezüglich des Anschlußteils des Ventilgehäuses.

Weiterbildungen und besondere Ausgestaltungen der Erfindung sind in den Unteransprüchen sowie der nachfolgenden Beschreibung angegeben.

Die Erfindung wird nachfolgend anhand eines in der Zeichnung dargestellten besonderen Ausführungsbeispiels näher erläutert, ohne dass insoweit eine Beschränkung erfolgt. Es zeigen:
- Fig. 1: einen Schnitt durch das Füllventil in einer vertikalen Ebene,
- Fig. 2: einen Schnitt in der Ebene A gemäß Fig. 1, wobei die vertikale Schnittebene B entsprechend Fig. 1 gleichfalls eingetragen ist,
- Fig. 3: einen Schnitt in einer horizontalen Ebene C gemäß Fig. 2,
- Fig. 4: einen Schnitt in einer horizontalen Ebene D gemäß Fig. 1,
- Fig. 5: teilweise in seitlicher Ansicht den Anschluss in Blickrichtung E gemäß Fig. 4, zusammen mit dem herausgelösten Anschlusskörper,
- Fig. 6: eine perspektivische Darstellung des Führungskörpers in Blickrichtung F schräg von unten gemäß Fig. 1.

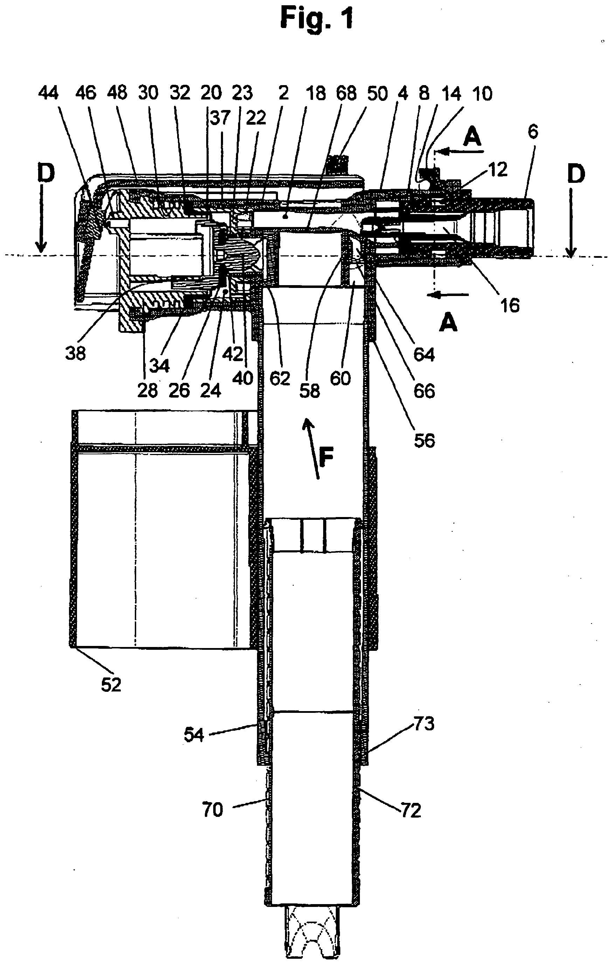

Figur 1 zeigt einen Schnitt durch das Füllventil mit einem Gehäuse 2, an dessen Anschluss 4 über einen Anschlusskörper 6 eine Wasserleitung anschließbar ist. Der Anschlusskörper 6, weicher auch als Anschlussnippel bezeichnet wird, besteht bevorzugt aus Messing oder einem vergleichbaren Werkstoff derart, dass die Wasserleitung bevorzugt durch Löten mit dem Anschlusskörper 6 verbindbar ist. Der Anschlusskörpers 6 greift teilweise in den als im Wesentlichen zylindrischer Stutzen ausgebildeten Anschluss 4 des Ventilgehäuses 2 ein, wobei mittels eines inbesondere als O-Ring ausgebildeten Dichtrings 8 eine flüssigkeitsdichte Anordnung vorgegeben ist. Zur lösbaren Befestigung des Anschlusskörpers 6 im Gehäuse 2 bzw. dessen Anschluss 4 ist ein Riegel 10 vorgesehen, welcher zweckmäßig im Wesentlichen U-förmig ausgebildet ist, den Anschluss 4 außen teilweise übergreift und durch wenigstens eine Durchbrechung des Anschlusses 4 radial nach innen, insbesondere in eine Ringnut 12 des Anschlusskörpers 6 eingreift. Bevorzugt ist der Anschlußkörper 6 mit einem hier nicht dargestellten Spülkastens derart verbunden oder in diesem angeordnet, dass nach der Montage der Riegel 10 im Innenraum des Spülkastens liegt. Bei Anordnung des Spülkastens in einer Installationswand und/oder unter Putz ist üblicherweise der Innenraum bei Bedarf durch eine Revisionsöffnung zugänglich, und somit auch der im Innenraum angeordnete Riegel, so dass problemlos die Verbindung mit dem Ventilgehäuse hergestellt bzw. gelöst werden kann.

Der Riegel 10 enthält zweckmäßig oben eine Ausnehmung 14, in welche ein Werkzeug, beispielsweise ein Schraubendreher, eingesetzt werden kann, um den Riegel 10 nach oben anzuheben und vom Anschluss 4 derart zu lösen, dass der Anschlusskörper 6 frei gegeben und somit vom Gehäuse 2 lösbar ist. Es sei angemerkt, dass der Riegel 10 derart federelastisch und an den Anschluss 4 derart angepasst ist, dass in der dargestellten Position der Riegel 10 und/oder dessen Schenkel mit dem Anschlusskörper 6 zu dessen axialer Festlegung im Gehäuse 2 nach Art einer Rast- und/oder Clipverbindung mit dem Anschlusskörper 6 in Eingriff ist. Durch Lösen und/oder Anheben des Riegels 10 wird die Verbindung des Anschlusskörpers 6 bezüglich des Gehäuses 2 frei gegeben, so dass im Übrigen das Füllventil von der mit dem Anschlusskörper 6 fest verbundenen Wasserleitung problemlos gelöst werden kann. Es versteht sich, dass umgekehrt in einfacher Weise die Verbindung des Füllventils bzw. dessen Gehäuses 2 mit der Wasserleitung schnell und problemlos hergestellt werden kann.

Ein Durchflussregler 16, welcher in vorteilhafter Weise zur Geräusch- und/oder Durchflussregelung des Wassers vorgesehen ist, ist zumindest teilweise im Inneren des Anschlusskörpers 6 angeordnet. In Verlängerung des Anschlusses bzw. Stutzens 4 ist im Gehäuse 2 ein langer durchgehender Kanal 18 bis hin zu einem Ventil 20 angeordnet, welches zweckmäßig als Membranventil ausgebildet ist. Der Durchgangskanal 18 des Gehäuses ist mittels einer Trennwand 68 radial nach außen, insbesondere nach unten in Richtung zu einem dort vorgesehenen Anschlußteil abgeschlossen, wie es nachfolgend näher erläutert wird. Am Ende des Kanals 18 ist im Gehäuse 2 ein Verteiler 22 vorgesehen. Der Verteiler 22 enthält ein Prallelement 23, auf welches das einströmende Wasser auftrifft und in unterschiedliche Richtungen verteilt wird. Das Prallelement 23 ist bevorzugt im wesentlichen orthogonal zur Strömungsrichtung des aus dem Kanal 18 in den Verteiler 22 bei geöffnetem Ventil 20 einströmenden Wassers und/oder zur Richtung des durchgehenden Kanals 18 oder zumindest dessen Endbereichs vor dem Verteiler angeordnet. Das Prallelement 23 ist bevorzugt plattenförmig ausgebildet und vorteilhaft in einem vorgegebenen Abstand zum Kanalende bzw. dem entsprechenden Gehäusebereich derart, dass zwischen dem plattenförmigen Ende und dem Gehäusebereich ein Freiraum vorhanden ist, durch welchen das Wasser weiter fließen kann.

Der Verteiler 22 enthält ferner eine Kammer 24, in welcher gleichfalls das Ventil 20 und/oder die Membrane 26 angeordnet sind. Der Verteiler 22 enthält zwischen dem genannten Freiraum mit dem Prallelement 23 und der Kammer 24 Öffnungen, durch welche das Wasser Ober dem Umfang verteilt in die Kammer 24 einströmen kann.

Der topfartig und in Richtung zu einem Verschlußdeckel 28 offen ausgebildete Verteiler 22 enthält eine ringförmige Außenwand 37, welche die Kammer 24 zumindest teilweise umgibt. Wie ersichtlich, ist der Verschlussdeckel 28 in einer Öffnung 30 des Gehäuses 2 angeordnet und insbesondere über eine Schraubverbindung in der Öffnung 30 bzw. dem Gehäuse 2 lösbar festgelegt. Zwischen einer Anlagefläche 34 des Verschlussdeckels 28 und dem axial gegenüber liegenden ringförmigen Ende des im Wesentlichen topfförmig ausgebildeten Verteilers 22 und/oder dessen Außenwand 37 ist ein Dichtring 32 angeordnet. Dieser Dichtring 32 wird bevorzugt durch den äußeren, insbesondere verdickten Rand der Membrane 26 gebildet. Der Verschlussdeckel 28 bzw. dessen Anlagefläche 34 und der als separates Bauteil ausgebildete Verteiler 22 sind derart ausgebildet und/oder aufeinander abgestimmt, dass der Verteiler 22 nach dem Festlegen und/oder Einschrauben des Verschlussdeckels 28, wie dargestellt, im Gehäuse 2 funktionssicher gleichfalls festgelegt und abgestützt ist, wobei mittels des genannten Dichtrings 32 und/oder der Membrane 26 und/oder deren äußeren Rand 32 eine funktionssichere Abdichtung der inneren Kammer 24 vorgegeben ist. Bei der Montage wird der Verteiler 22 durch die Öffnung 30 in das Gehäuse 2 eingesetzt, welches nachfolgend mittels des Verschlussdeckels 28 verschlossen wird, wobei der Verteiler 22 an dem Dichtring 32 und/oder der Membrane 26 und/oder deren äußeren Rand 32 abgestützt und abgedichtet wird. Zu Wartungszwecken kann der Verteiler 22 nach dem Lösen des Verschlussdeckels 28 ebenso wie dieser aus der Öffnung 30 und somit aus dem Gehäuse 2 heraus genommen werden.

Das Ventil 20 enthält einen axial bewegbaren Verschlusskörper 38, bevorzugt mit einem Einknöpfteil 40 für die Membrane 26, welche in der hier dargestellten geschlossenen Position des Ventils an einem Ventilsitz 42 des Gehäuses 2 dichtend anliegt. Der im Inneren zumindest teilweise hohle Verschlussdeckel 28 weist eine mittels eines bevorzugt elastischen Stopfens 44 verschließbare Öffnung 46 auf. Der Stopfen 44 ist an einem bezüglich des Gehäuses 2 schwenkbar gelagerten Schließhebel 48 angeordnet, welcher über einen Verstellbolzen 50 mit einem Schwimmer 52 gekoppelt ist. Der Schwimmer 52 ist vorteilhaft an einem aus dem Gehäuse 2 nach unten herausgeführten Füllrohr 54 in der Höhe verschiebbar derart geführt, dass in Abhängigkeit des Wasserstandes in dem hier nicht dargestellten Spülkasten das Ventil 20 geschlossen oder geöffnet ist. Es sei angemerkt, dass durch Absenken des Schwimmers 52 über den Schließhebel 48 die Öffnung 46 des Verschlussdeckels 28 frei gegeben wird, so dass der Verschlusskörper 38 aus der dargestellten Position nach links bewegt wird und die Membrane 26 vom Ventilsitz 42 abhebt. Das durch den Kanal 18 einströmende Wasser wird mittels des Verteilers 22 und insbesondere mittels des Prallelements 23 in der Kammer 24 und/oder im Ringspalt zwischen der Membrane 26 und dem Ventilsitz 22 im Wesentlichen gleichmäßig verteilt, ohne dass hierbei unerwünschte Ringströmungen, Verwirbelungen oder dergleichen auftreten. Aus der inneren Kammer 24 strömt dann das Wasser durch den Ringspalt zwischen der Membran 26 und dem Ventilsitz 42 vorbei an dem Einknöpfteil 40 in Richtung zum Füllrohr 54.

Das Gehäuse 2 enthält ferner ein nach unten gerichtetes, vorteilhaft ringförmiges Anschlussteil 56, in welches das Füllrohr 54 mit seinem oberen Ende eingreift und mit welchem das Füllrohr 54 in geeigneter Weise verbunden ist. Die Verbindung ist bevorzugt lösbar ausgebildet, beispielsweise als Clip- oder Rastverbindung mit korrespondierenden Rastelementen, wie Rastnocke und Rastöffnung, am Füllrohr 43 bzw. Anschlußteil 56 oder in Form einer Gewinde- oder Bajonettverbindung. Ferner kann die Verbindung dauerhaft ausgebildet sein, beispielsweise als Klebe- oder Schweißverbindung. Das Gehäuse 2 enthält oberhalb des Füllrohrs 54 und/oder koaxial zu diesem und/oder dem Anschlussteil 56 ein Ringelement 58 derart, dass in vorteilhafter Weise ein nach unten offener Ringraum 60 vorhanden ist. Der Ringraum 60 steht mit dem Ventil 20 Ober einem Kanal 62 in Verbindung, an dessen äußeren, gemäß Zeichnung linken Ende der Ventilsitz 42 sich befindet. In dem Ringraum 60 ist erfindungsgemäß ein Führungskörper 64 angeordnet. Der Führungskörper 64 ist ein separates Bauteil und bevorzugt als Hülse und/oder ringförmig ausgebildet und besitzt eine nach unten gerichtete wendelförmige Führungsfläche 66. Der Ringraum 60 und ebenso der innere Bereich des Ringelements 58 sind mittels einer Trennwand 68 des Gehäuses 2 von dem durchgehenden Kanal 18 funktionssicher getrennt.

Der Führungskörper 64 liegt mit seinem oberen Ende vorteilhaft an der Unterseite der Trennwand 68 an und ist somit zwischen dem Füllrohr 54 und der Trennwand 68 in vorteilhafter Weise unverschiebbar fixiert. Die genannte Trennwand 68 besitzt eine bevorzugt gebogene und/oder im Wesentlichen zylindrische Außenkontur oder Außenfläche. An diese angepasst enthält der Führungskörper 64 in seinem oberen Endbereich Ausnehmungen, welche die Trennwand 68 von unten her teilweise umgreifen. Hierdurch wird auf einfache Weise eine Drehsicherung des vorteilhaft als im Wesentlichen zylindrischer Einsatzkörper ausgebildeten Führungskörpers 64 bezüglich dem Kanal 62 derart gewährleistet, dass das aus dem Kanal 62 ausströmende Wasser in der erforderlichen Weise die untere Führungsfläche 66 des Führungskörpers 64 anströmt. Alternativ können die aneinander angepaßten Drehsicherungselemente des Gehäuses 2 einerseits und des Führungskörpers 64 andererseits als Abflachungen, Stege, Nuten, Verzahnungen ausgebildet sein. So kann insbesondere das Ringelement 58 anstelle einer zylindrischen Außenfläche, welche den Ringraum 60 innen begrenzt, beispielsweise eine Mehrkantfläche oder einen Steg aufweisen, mit welchen die äußere Umfangfläche des hülsenförmigen Führungskörpers 64 korrespondiert.

Sofern das Ventil 20 geöffnet ist, strömt das eingeleitete Wasser aus der inneren Kammer 24 durch den Kanal 62, in welchen das Einknöpfteil 40 eintaucht, in den Ringraum 60 und strömt dort an der unteren wendelförmigen Führungsfläche 66 des Führungskörpers 64 nach unten in das Füllrohr 54, wobei das Wasser mit geringer Fließgeschwindigkeit nach unten geführt wird und nachteilige Fließgeräusche in zweckmäßiger Weise vermieden werden. Der Führungskörper 64 kann bei der Montage von unten durch das Anschlussteil 56 in das Gehäuse 2 und/oder den Ringraum 60 eingeschoben werden. Der Führungskörper 64 ist mit seiner Unterkante in vorteilhafter Weise am oberen Ende bzw. dem Rand des Füllrohrs 54 abgestützt. Sofern zwischen dem Füllrohr 54 und dem Anschlussteil 56 in bevorzugter Weise eine lösbare Verbindung vorgesehen ist, kann bei Bedarf, insbesondere zu Wartungszwecken, der Führungskörper 64 problemlos nach unten aus dem Anschlussteil 56 herausgenommen werden. Mit dem Füllrohr 54 ist weiterhin ein Schieberohr 70 teleskopartig verbunden, und zwar insbesondere zur Anpassung an unterschiedliche Einbauhöhen und/oder Tiefen des Spülkastens. Das Schieberohr 70 weist zur Höhen- bzw. Längeneinstellung vorteilhaft Rastelemente, insbesondere in Form von Ringnuten 72 auf, in welche wenigstens ein korrespondierendes Rastelement 73, insbesondere in Form eines Nockens, des Füllrohrs 54 entsprechend der vorgenommenen Einstellung eingreift.

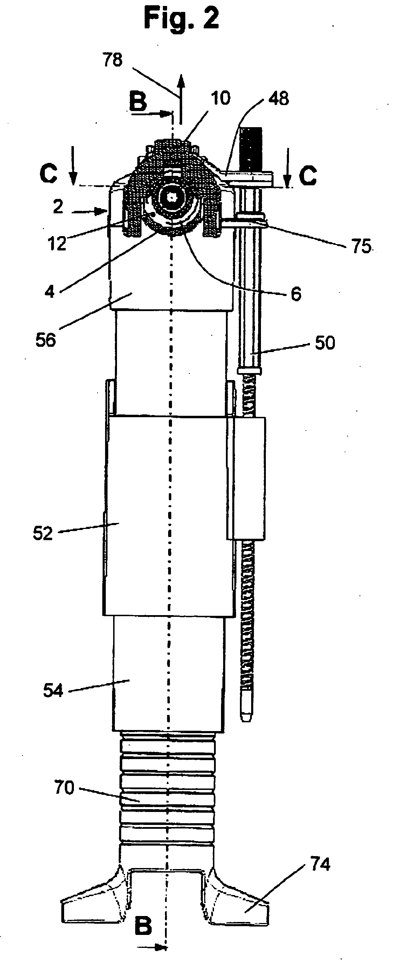

Figur 2 zeigt das Füllventil in der vertikalen Schnittebene A gemäß Figur. 1, und im Übrigen in einer seitlichen Ansicht das Gehäuse 2, den Verstellbolzen 50, den an Letzteren gekoppelten Schwimmer 52, sowie das Füllrohr 54 und das in diesem teleskopartig geführte Schieberohr 70. Am unteren Ende des Schieberohrs 70 sind Verteilelemente 74 für das nach unten in den Spülkasten ausströmende Wasser vorgesehen. Der Verstellbolzen 50 ist mit dem Schließhebel 48 gekoppelt und mittels eines Lagerelements 77 des Gehäuses 2 in der Höhe bewegbar geführt. Ferner ist die Schnittebene B der Figur 1 markiert. Des Weiteren ist der im Wesentlichen U-förmig ausgebildete Riegel 10 auf dem Anschluss 4 zur Festlegung des Anschlusskörpers 6 gut zu erkennen. Der Riegel 10 greift mit wenigstens einem radial nach innen gerichteten Nocken 76 in die Ringnut 12 des Anschlusskörpers 6 zwecks dessen axialer Festlegung im Anschluss bzw. Stutzen 4. Wird der Riegel 10 in Richtung des Pfeiles 78, beispielsweise mittels eines Schraubendrehers, nach oben geschoben, so wird der Anschlusskörper 6 frei gegeben und das Füllventil bzw. dessen Gehäuse 2 kann in der gewünschten Weise gelöst und beispielsweise aus dem Spülkasten herausgenommen werden.

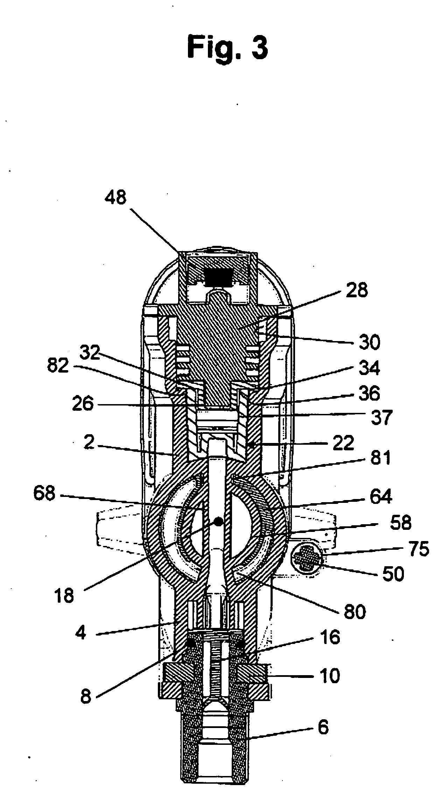

Figur 3 zeigt das Füllventil in der horizontalen Schnittebene C gemäß Figur 2 mit dem mittels des Riegels 10 im Anschluss 4 festgelegten Anschlusskörper 6 sowie dem Dichtring 8 zwischen dem Anschlusskörper 6 und der Innenwandung des Anschlusses 4. Der teilweise im Inneren des Anschlusskörpers 6 angeordnete Durchflußregler 16 enthält radial gerichtete Stege mit zwischen diesen befindlichen und in der Zeichnung nicht erkennbaren Ausnehmungen derart, dass das Wasser aus der Wasserleitung durch den Anschlusskörper 6 in den durch das Gehäuse 2 verlaufender Kanal 18 strömen kann, welcher von der Trennwand 68 umgeben ist. Die Trennwand 68 sowie das Ringelement 58 sind Bestandteil des Gehäuses 2, in welches durch das untere Anschlußteil, welches gemäß Zeichnung hinter der Zeichenebene sich befindet, der Führungskörper 64 von unten eingeschoben bzw. eingesetzt ist.

Der Führungskörper 64 enthält im Bereich des oberen Endes die bereits erwähnten Ausnehmungen 80, 81, welche die Trennwand 68 des Gehäuses 2 außen von unten her teilweise umgreifen, wobei durch die derart ausgebildeten Drehsicherungselemente die erforderliche Drehwinkelpositionierung des Führungskörpers 64 im Gehäuse vorgegeben ist. Der im wesentlichen oberhalb des Führungskörpers 64 und/oder im oberen Endbereich desselben angeordnete Durchgangskanal 18 endet an dem Verteiler 22, welcher in der Öffnung 30 zusammen mit dem Verschlußdeckel 28 festgelegt ist. Zwischen der Anlagefläche 34 des Verschlußdeckels 28 und dem Ende 36 der Außenwand 37 des im wesentlichen topfförmigen Verteilers 22 ist der äußere Rand 32 der Membrane 26 zwecks Abdichtung angeordnet, wobei das Ende 36 Ober den äußeren Rand 32, welcher als Dichtring ausgebildet ist, an der Anlagefläche 34 abgestützt ist. Weiterhin enthält das Gehäuse im Bereich der Öffnung 30 bzw. des Dichtrings und/oder äußeren Randes 32 zu dessen Abstützung einen Ringbund 82. Der mit dem Schließhebel 48 gekoppelte Verstellbolzen 50 ist in dem Lagerelement 75 verschiebbar geführt.

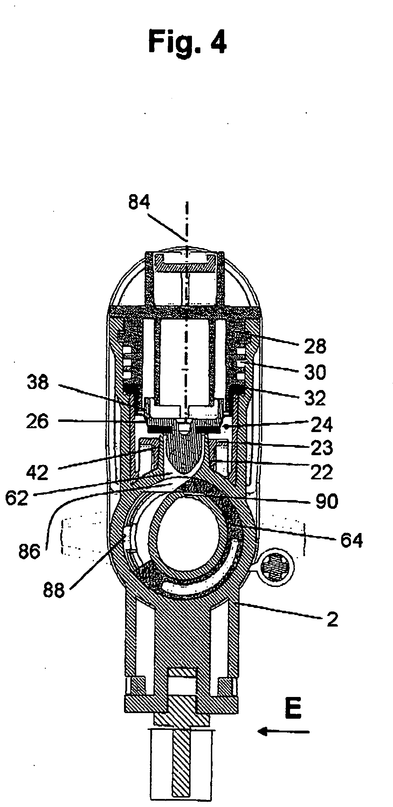

In Figur 4 ist das Füllventil in der horizontalen Schnittebene D gemäß Figur 1 dargestellt, wobei der Verschlußdeckel 28, der Verschlußkörper 38 und die Membrane 26 in der durch die Achse 84 der Öffnung 30 liegenden Schnittebene dargestellt sind. Der in der Öffnung 30 axial an den Verschlußdeckel 28 anschließende Verteiler 22 ist andererseits am Ende des oben erläuterten durchgehenden Kanals angeordnet, so dass das einströmende Wasser in die Kammer 24 vor dem Ventil bzw. der Membrane 26 weitgehend gleichförmig verteilt einströmt. Die Kammer 24 ist erfindungsgemäß innerhalb des Verteilers 22 vorgesehen und wird radial außen, bezogen auf die Achse 84, von der Außenwand 37 umgeben. In der dargestellten Schließstellung des Ventils liegt die Membrane 26 dichtend am Ventilsitz 42 des Gehäuses 2 an.

Bei geöffnetem Ventil strömt das Wasser aus der Kammer 24 durch den in der Einbauposition des Füllventils im wesentlichen horizontal ausgerichteten Kanal 62 in Richtung zum Führungskörper 64. Der Führungskörper 64 enthält eine Eintrittsöffnung 86, weiche aufgrund der bereits erläuterten Drehsicherungselemente auf den Kanal 62 ausgerichtet ist. Aufgrund der nach unten weisenden, gemäß Zeichnung hinter die Zeichenebene liegenden wendelförmigen Führungsfläche des Führungskörpers 64 wird eine Fließbewegung entlang der Innenwand 88 des Gehäuses 2 und/oder dessen Anschlußteil sowie des angeschlossenen Füllrohrs mit geringer Fließgeschwindigkeit und somit unter Vermeidung von störenden Fließgeräuschen vorgegeben. Wie ersichtlich, ist das Ringelement 58 nicht exakt zylindrisch, sondern teilweise oval ausgebildet und enthält zudem in seiner Außenfläche eine Abflachung 90, wobei der Führungskörper 64 eine hierzu korrespondierende Innenkontur aufweist, so dass durch die derart ausgebildeten Drehsicherungselemente die erforderliche Ausrichtung des Führungskörpers 64 und/oder dessen Eintrittsöffnung 86 zum Gehäusekanal 62 sichergestellt ist.

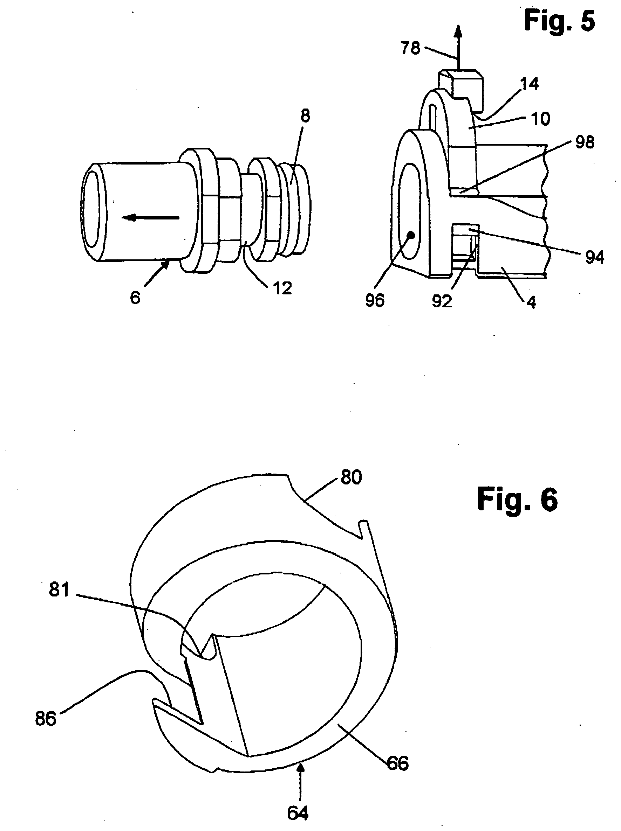

Figur 5 zeigt teilweise den als Stutzen ausgebildeten Anschluss 4 des Gehäuses und ferner herausgelöst den Anschlußkörper 6. Der Anschlußkörper 6 enthält die Ringnut 12, in welche der Riegel 10, insbesondere mit dem vorstehend erläuterten Schenkel und/oder Nocken zur Fixierung des Anschlußkörpers 6 im Anschluss 4 bzw. dem Gehäuse eingreifen kann. Der Riegel 10 ist in Richtung des Pfeils 78 nach oben in eine obere Endlage geschoben. Der Anschluss 4 enthält eine Ausnehmung 92, an deren oberen Ende ein Haken 94 des Riegels 10 zur Anlage gebracht ist, so dass die obere Endlage definiert vorgegeben ist und ein unerwünschtes wollständiges Herauslösen des Riegels 10 funktionssicher verhindert wird. Wird nach dem Einschieben des Anschlußkörpers in die Anschlußöffnung 96 der Riegel 10 entgegen der Richtung des Pfeils 78 nach unten geschoben, so gelangt der äußere Nocken 98 in den oberen Endbereich der Ausnehmung 92, so dass in bevorzugter Weise der Riegel 10 die Arretierungsposition zuverlässig beibehält. Wie ersichtlich, ist die Anschlußöffnung 96 nicht zylindrisch, sondern oval bzw. unrund und korrespondierend hierzu ist ferner die Außenkontur des in den Anschluss 4 einzuführenden Teils des Anschlußkörpers 6 ausgebildet, wodurch eine definierte Drehwinkellage in zweckmäßiger Weise vorgegeben ist. Es versteht sich, dass der für die Aufnahme des Dichtrings 8 vorgesehene Endteil des Anschlußkörpers 6 bevorzugt zylindrisch ausgebildet ist.

Figur 6 zeigt in perspektivischer Darstellung in Blickrichtung von unten den Führungskörper 64 mit den Ausnehmungen 80, 81, der Eintrittsöffnung 86 sowie der unteren wendelförmigen Führungsfläche 66. Der Führungskörper 64 ist als Hülse und/oder Einsatzkörper ausgebildet, welcher gemäß obigen Ausführungen von unten her in das Anschlußteil und/oder den Ringraum des Gehäuses einsetzbar ist und in diesen aufgrund der Drehsicherungselemente eine vorgegebene Drehwinkelposition im Gehäuse derart einnimmt, dass die Eintrittsöffnung 86 auf den im Anschluss an das Ventil im Gehäuse 2 vorhandenen inneren Kanal des Gehäuses ausgerichtet ist.

**Bezugzeichen**

| | | | |
|---|---|---|---|
| 2 | Gehäuse | 58 | Ringelement |
| 4 | Anschluss / Stutzen | 60 | Ringraum |
| 6 | Anschlusskörper | 62 | Kanal |
| 8 | Dichtring | 64 | Führungskörper |
| 10 | Riegel | 66 | Führungsfläche von 64 |
| 12 | Ringnut in 6 | 68 | Trennwand in 2 |
| 14 | Ausnehmung in 10 | 70 | Schieberohr |
| 16 | Durchflussregler | 72 | Rastelement / Ringnut an 70 |
| 18 | Kanal | 73 | Rastelement / Nocke von 54 |
| 20 | Ventil | 74 | Verteilelement von 70 |
| 22 | Verteiler | 75 | Lagerelement für 50 |
| 23 | Prallelement | 76 | Nocken von 10 |
| 24 | innere Kammer | 78 | Pfeil |
| 26 | Membrane | 80, 81 | Ausnehmung in 64 |
| 28 | Verschlussdeckel | 82 | Ringbund in 30 |
| 30 | Öffnung in 2 | 84 | Achse von 30 |
| 32 | Dichtring/äußerer Rand von 26 | 86 | Eintrittsöffnung von 64 |
| 34 | Anlagefläche von 28 | 88 | Innenwand von 2 und/oder 56 |
| 36 | Ende von 22 | 90 | Abflachung von 58 |
| 37 | Außenwand von 22 | 92 | Ausnehmung in 4 |
| 38 | Verschlusskörper | 94 | Haken an 10 |
| 40 | Einknöpfteil von 38 | 96 | Anschlußöffnung in 4 |
| 42 | Ventilsitz in 2 | 98 | Nocken an 10 |
| 44 | Stopfen | | |
| 46 | Öffnung in 28 | | |
| 48 | Schließhebel | | |
| 50 | Verstellbolzen | | |
| 52 | Schwimmer | | |
| 54 | Füllrohr | | |
| 56 | Anschlussteil | | |

## Patentansprüche

1. Füllventil für einen Spülkasten, enthaltend ein Gehäuse (2) mit einem Anschluss (4) an eine Wasserleitung sowie ein mittels eines Schwimmers (52) betätigbares Ventil (20) mit einer Membrane (26) und einen Ventilsitz (42), wobei zwischen dem Anschluss (4) und dem Ventil (20) ein Kanal (18) vorgesehen ist, an dessen Ende in dem Bereich vor dem Ventil (20) ein Verteiler (22) angeordnet ist, welcher bei geöffnetem Ventil (20) vom einströmenden Wasser durchströmbar ist und welcher ein vom Wasser anströmbares Prallelement (23) enthält,
**dadurch gekennzeichnet, dass** der Verteiler (22) in einer Öffnung (30) des einteilig ausgebildeten Gehäuses (2) mittels eines Verschlußdeckels (28) festgelegt ist, welcher mit dem Gehäuse (2) lösbar verbunden ist und mittels welchem die Öffnung (30) ver schließbar ist, dass die Öffnung (30) bezüglich des Anschlußes (4) diametral auf der anderen Seite des Gehäuses (2) angeordnet ist und der Kanal (18) im Gehäuse (2) angeordnet ist, dass der Verteiler (22) eine ringförmige Außenwand (37) aufweist und in Richtung zum Verschlußdeckel (28) topfartig und offen ausgebildet ist und dass die Außenwand (37) eine innere Kammer (24) zumindest teilweise umgibt, in welcher die Membrane (26) und der Ventilsitz (42) angeordnet sind.

2. Füllventil nach Anspruch 1, **dadurch gekennzeichnet, dass** das Prallelement (23) im Wesentlichen orthogonal zur Richtung des Kanals (18) oder zumindest des Endbereichs des Kanals (18) angeordnet ist.

3. Füllventil nach Anspruch 1 oder 2, **dadurch gekennzeichnet, dass** der Verteiler (22) durch die mittels des Verschlußdeckels (28) verschließbare Öffnung (30) des Gehäuses (2) in dieses einsetzbar ist und nach Lösen der Verbindung des Verschlußdeckels (28) mit dem Gehäuse (2) sowie Herausnehmen des Verschlußdeckels (28) aus dem Gehäuse (2) gleichfalls der Verteiler (22) herausnehmbar ist.

4. Füllventil nach einem der Ansprüche 1 bis 3, **dadurch gekennzeichnet, dass** die Außenwand (37) im Wesentlichen zylindrisch ausgebildet ist und/oder die bevorzugt ringförmige innere Kammer (24) umgibt.

5. Füllventil nach einem der Ansprüche 1 bis 4, **dadurch gekennzeichnet, dass** zwischen der Außenwand (37), und zwar insbesondere deren Ende (36), und dem Verschlußdeckel (28) und/oder dem Gehäuse (2) ein Dichtring (32) angeordnet ist, welcher insbesondere als ein äußerer Rand der Membrane (26) ausgebildet ist.

6. Füllventil nach einem der Ansprüche 1 bis 5, **dadurch gekennzeichnet, dass** der Verteiler (22) einen bevorzugt ringförmigen Teil aufweist, in welchen der genannte Kanal (18) mündet und welcher zumindest teilweise vom Prallelement (23) begrenzt wird.

7. Füllventil nach Anspruch 6, **dadurch gekennzeichnet, dass** der genannte Teil des Verteilers (2) einen Durchgangskanal (62) des Gehäuses (2) umgibt, und/oder dass der genannte Durchgangskanal (62) zwischen dem Ventilsitz (42) des Ventils und einem Anschlußteil (56) des Gehäuses (2) angeordnet ist, wobei bei geöffnetem Ventil (20) das Wasser aus der Kammer (24) des Verteilers (22) in Richtung zum Anschlußteil (56) strömen kann.

## Claims

1. A fill valve for a flushing tank, the fill valve comprising:
a housing (2) with a connector (4) for a water pipe;
and a valve (20) that is actuatable by a float (52) and includes a membrane (26) and a valve seat (42), wherein a channel (18) is provided between the connector (4) and the valve (20), wherein a distributor (22) is arranged in a portion of the channel upstream of the valve (20), wherein the distributor is flowable by inflowing water when the valve (20) is open and includes an impact element (23) which is impacted by the water,
**characterized in that** the distributor (22) is fixated in an opening (30) of the one piece housing (2) by a closure cover (28) which is connected with the housing (2) in a disengageable manner and by which the opening (30) is closeable, that the opening (30) is arranged with respect to the connector (4) diametrically on another side of the housing (2) and the channel (18) is arranged in the housing (2) so that the distributor (22) includes a ring shaped outer wall (37) and is configured pot shaped and open in a direction towards the closure cover (28) and that the outer wall (37) at least partially envelops an inner chamber (24) in which the membrane (26) and the valve seat (42) are arranged.

2. The fill valve according to claim 1, **characterized in that** the impact element (23) is essentially arranged orthogonal to a direction of the channel (18) or at least of an end portion of the channel (18).

3. The fill valve according to claim 1 or 2, **characterized in that** the distributor (22) is insertable into the housing (2) through the opening (30) of the housing (2) that is closeable by the closure cover (28) and the distributor (22) is removable from the housing (2) after disengaging a connection of the closure cover (28) with the housing (2) and removing the closure cover (28) from the housing (2).

4. The fill valve according to one of the claims 1 through 3, **characterized in that** the outer wall (37) is configured essentially cylindrical and/or envelops the advantageously annular inner chamber (24).

5. The fill valve according to one of the claims 1 through 4, **characterized in that** a seal ring (32) is arranged between the outer wall (37), thus in particular its end (36) and the closure cover (28) and/or the housing (2), wherein the seal ring is configured in particular as an outer rim of the membrane (26).

6. The fill valve according to one of the claims 1 - 5, **characterized in that** the distributor (22) includes an advantageously outer portion into which the channel (18) opens and which is at least partially defined by the impact element (23).

7. The fill valve according to claim 6, **characterized in that** the portion of the distributor (2) envelops a pass through channel (62) of the housing (2) and/or that the pass through channel (62) is arranged between the valve seat (42) of the valve and a connecting portion (56) of the housing (2), wherein water can flow from the chamber (24) of the distributor (22) in a direction towards the connecting portion (59) when the valve (20) is open.

## Revendications

1. Valve de remplissage pour un réservoir de chasse d'eau, contenant un boîtier (2) avec un raccordement (4) se trouvant au niveau d'une conduite d'eau, ainsi qu'une valve (20), qui est pourvue d'une membrane (26) et qui peut être actionnée au moyen d'un flotteur (52), et un siège de valve (42), où un canal (18) est prévu entre le raccordement (4) et la valve (20), canal (18) à l'extrémité duquel un répartiteur (22) est disposé dans la zone se trouvant devant la valve (20), lequel peut être traversé par l'eau qui afflue quand la valve (20) est ouverte et lequel contient un élément de percussion (23) pouvant être alimenté par l'eau,
**caractérisée en ce que** le répartiteur (22) est mis en place dans une ouverture (30) du boîtier (2), conçu d'une seule pièce, au moyen d'un bouchon de fermeture (28), lequel est relié de manière amovible au boîtier (2) et au moyen duquel l'ouverture (30) peut être obturée, **caractérisée en ce que** l'ouverture (30) est disposée diamétralement de l'autre côté du boîtier (2), par rapport au raccordement (4), et le canal (18) est disposé dans le boîtier (2), **caractérisée en ce que** le répartiteur (22) présente une paroi externe (37) de forme circulaire et est conçu de manière ouverte et en forme de pot, en allant dans la direction du bouchon de fermeture (28), et **caractérisée en ce que** la paroi externe (37) entoure, tout au moins en partie, une chambre (24) intérieure dans laquelle sont disposés la membrane (26) et le siège de valve (42).

2. Valve de remplissage selon la revendication 1, **caractérisée en ce que** l'élément de percussion (23) est disposé pour l'essentiel de manière orthogonale par rapport à la direction du canal (18) ou, tout au moins, par rapport à la direction de la zone d'extrémité du canal (18).

3. Valve de remplissage selon la revendication 1 ou 2, **caractérisée en ce que** le répartiteur (22) peut être inséré dans le boîtier (2), à travers l'ouverture (30) du boîtier (2) pouvant être obturée au moyen du bouchon de fermeture (28), et de la même manière, le répartiteur (22) peut être extrait en dehors du boîtier (2) après avoir desserré le raccord se trouvant entre le bouchon de fermeture (28) et le boîtier (2) ainsi qu'en retirant le bouchon de fermeture (28).

4. Valve de remplissage selon l'une des revendications 1 à 3, **caractérisée en ce que** la paroi externe (37) est conçue pour l'essentiel de manière cylindrique et/ou entoure la chambre (24) intérieure qui, de préférence, est de forme circulaire.

5. Valve de remplissage selon l'une des revendications 1 à 4, **caractérisée en ce qu'**une bague d'étanchéité (32) est disposée entre la paroi externe (37) et, notamment, en particulier à son extrémité (36), et le bouchon de fermeture (28) et/ou le boîtier (2), laquelle bague d'étanchéité (32) est conçue en particulier comme une bordure extérieure de la membrane (26).

6. Valve de remplissage selon l'une des revendications 1 à 5, **caractérisée en ce que** le répartiteur (22) présente de préférence une partie de forme circulaire, dans laquelle débouche le canal (18) mentionné et laquelle est délimitée, tout au moins en partie, par l'élément de percussion (23).

7. Valve de remplissage selon la revendication 6, **caractérisée en ce que** la partie mentionnée du répartiteur (2) entoure un canal de passage (62) du boîtier (2) et/ou **caractérisée en ce que** le canal de passage (62) mentionné est disposé entre le siège de valve (42) de la valve et une pièce de raccordement (56) du boîtier (2), l'eau pouvant circuler de la chambre (24) du répartiteur (22) dans la direction de la pièce de raccordement (56), quand la valve (20) est ouverte.
